# EUROPEAN PATENT APPLICATION

(11) **EP 4 783 308 A1**
(43) Date of publication of application: **29.07.2026**
(21) Application number: 25224256.5
(22) Date of filing: 17.12.2025
(51) Int. Cl.: H01M 50/103, H01M 50/15, H01M 50/342

(54) **SECONDARY BATTERY**

(30) Priority: 24.01.2025 KR 20250011345
(71) Applicant: SAMSUNG SDI CO., LTD., Yongin-si, Gyeonggi-do 17084 (KR)
(72) Inventor: BAEK, Soomin, 17084 Yongin-si (KR)
(74) Representative: Maiwald GmbH

(57) **Abstract**

A secondary battery includes an electrode assembly, a case accommodating the electrode assembly therein, the case having a vent hole on at least one side thereof, and a vent portion arranged in the vent hole, the vent portion including a polymer layer and a brittle layer on the polymer layer.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to an aspect of the present disclosure, a secondary battery may include an electrode assembly, a case accommodating the electrode assembly and having a vent hole formed on at least one side, and a vent portion arranged in the vent hole, wherein the vent portion may include a polymer layer and a brittle layer disposed on the polymer layer.

In some embodiments, the polymer layer may include at least one of polypropylene, polyimide, polyvinyl chloride, polytetrafluoroethylene, polyurethane, polyamide, and combinations thereof.

In some embodiments, the brittle layer may include at least one of glass, ceramic, silicon, limestone, aluminum oxide (Al₂O₃), indium tin oxide (ITO), a magnesium alloy, and combinations thereof.

In some embodiments, a lower end of the one side of the case in contact with the vent hole may include a first stepped portion, and a second stepped portion connected to the first stepped portion and located at a level higher than an upper surface of the first stepped portion.

In some embodiments, the polymer layer is bonded to the first stepped portion.

In some embodiments, the brittle layer is bonded to the second stepped portion.

In some embodiments, the first stepped portion may include a first surface connected to a lower surface of the one side of the case in contact with the vent hole, and perpendicular to the lower surface, and a second surface connected to the first surface and parallel to the lower surface, and a length of the second surface along a longitudinal direction of the case is greater than or equal to 2 mm.

In some embodiments, the second stepped portion may include a third surface connected to the second surface and perpendicular to the lower surface, and a fourth surface connected to the third surface and parallel to the lower surface, and a length of the fourth surface along a longitudinal direction of the case is greater than or equal to 1 mm.

In some embodiments, at least one side of the case may include a cap plate, and the vent portion is formed in the cap plate.

In some embodiments, the secondary battery further includes an adhesive layer disposed between the polymer layer and the brittle layer.

In some embodiments, the adhesive layer may include at least one of an acrylic adhesive, a rubber adhesive, a silicone adhesive, an epoxy adhesive, a polyurethane adhesive, a cyanoacrylate adhesive, a polyvinyl chloride adhesive, a hot melt adhesive, and combinations thereof.

In some embodiments, a thickness of the polymer layer is less than 1 mm.

In some embodiments, a secondary battery may include an electrode assembly, a case accommodating the electrode assembly and having a vent hole formed on at least one side, and a vent portion arranged in the vent hole, wherein an upper end of the case in contact with the vent hole is formed with a protrusion structure or a groove structure, and the vent portion may include a polymer layer, an adhesive layer disposed on the polymer layer, and a brittle layer disposed on the adhesive layer.

In some embodiments, the protrusion structure is formed by a portion of an upper end of the one side of the case in contact with the vent hole extending parallel to a lower surface of the one side of the case toward the vent hole.

In some embodiments, a length of the protrusion structure along a longitudinal direction of the case is 1-10 mm.

In some embodiments, the groove structure is formed by a portion of an upper end of the one side of the case in contact with the vent hole being recessed inward.

In some embodiments, a length of the groove structure along a longitudinal direction of the case is 1-10 mm.

In some embodiments, a lower end of the one side of the case in contact with the vent hole may include a stepped portion.

In some embodiments, the polymer layer is bonded to the stepped portion.

In some embodiments, the brittle layer is bonded to both inner surfaces of the one side of the case in contact with the vent hole.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to an embodiment of the present disclosure.
FIG. 2 illustrates a perspective view of a secondary battery according to another embodiment of the present disclosure.
FIG. 3 is a cross-sectional view taken along line a-a' of FIG. 1.
FIG. 4 illustrates a vent portion of a secondary battery according to an embodiment of the present disclosure.
FIG. 5 illustrates a surface of a case of a secondary battery according to an embodiment of the present disclosure.
FIG. 6 illustrates a surface of a case of a secondary battery with a vent portion according to an embodiment of the present disclosure.
FIG. 7 illustrates a surface of a case of a secondary battery according to another embodiment of the present disclosure.
FIG. 8 illustrates a surface of a case of a secondary battery according to still another embodiment of the present disclosure.
FIG. 9 is a top view illustrating a surface of a case of a secondary battery according to an embodiment of the present disclosure.
FIG. 10 is a top view illustrating a surface of a case of a secondary battery according to another embodiment of the present disclosure.
FIG. 11 is a top view illustrating a surface of a case of a secondary battery according to still another embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the scope of the disclosure.

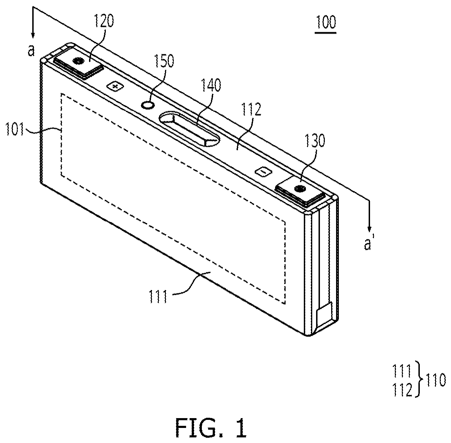

FIG. 1 is a perspective view illustrating a secondary battery 100 according to an embodiment of the present disclosure.

Referring to FIG. 1, the secondary battery 100 according to an embodiment of the present disclosure may include an electrode assembly 101, a case 110 that accommodates the electrode assembly 101 and has a vent hole formed on at least one side, and a vent portion 140 arranged in the vent hole.

An electrode assembly may be formed by winding or stacking a stack of a first electrode plate, a separator, and a second electrode plate, which are formed as thin plates or films. When the electrode assembly is a wound stack, a winding axis may be parallel to the longitudinal direction of the case 110. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case 110, and the number of electrode assemblies in the case 110 is not limited in the present disclosure. The first electrode plate of the electrode assembly may act as a negative electrode, and the second electrode plate may act as a positive electrode. Of course, the reverse is also possible. Therefore, the first electrode plate of the electrode assembly may act as a positive electrode, and the second electrode plate may act as a negative electrode.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

Referring back to FIG. 1, the case 110 may form an overall exterior of the secondary battery 100. For example, the secondary battery 100 may be a prismatic battery. In that case, the case 110 of the secondary battery 100 may have, e.g., a generally rectangular parallelepiped shape.

The case 110 may include a body 111 and a cap plate 112. The body 111 may have a rectangular parallelepiped shape with one open end defining an accommodating space to receive the electrode assembly. For instance, the body 111 may include a rectangular bottom surface and four side walls that extend perpendicularly from the bottom surface. For example, the side walls may include two long sides facing each other and two short sides facing each other so that the case 110 may be provided in a box shape having one open end. Accordingly, the electrode assembly may be placed in the interior of the case 110 so as to be supported by the bottom surface of the case and surrounded by the four side walls.

The cap plate 112 may be coupled to the body 111 to seal the case 110. For instance, the cap plate 112 may be joined to one end of the side walls of the body 111, thus closing the open end of the body 111.

A first electrode terminal 120 and a second electrode terminal 130 may be coupled to the cap plate 112. For example, as illustrated in FIG. 1, the first electrode terminal 120 and the second electrode terminal 130 may be disposed on one (e.g., the same) surface of the cap plate 112 at a certain interval. In another example, the positions of the first electrode terminal 120 and the second electrode terminal 130 according to the present disclosure may vary.

The first electrode terminal 120 and the second electrode terminal 130 may pass through the cap plate 112 to protrude outward. For example, the first electrode terminal 120 may be electrically connected to a first electrode in the electrode assembly, and the second electrode terminal 130 may be electrically connected to a second electrode in the electrode assembly. Of course, the reverse arrangement is also possible.

In FIG. 1, it is shown that the first electrode terminal 120 and the second electrode terminal 130 are both coupled to the cap plate 112. However, at least one (e.g., only one) of the first electrode terminal 120 or the second electrode terminal 130 may be coupled to the cap plate 112.

At least one side of the case 110 may include a vent hole, and the vent portion 140 may be arranged in the vent hole. The vent portion 140 may be formed, e.g., in the cap plate 112. The vent portion 140 may prevent an explosion of the secondary battery 100 or prevent a chain thermal reaction in a secondary battery arranged in close proximity to the secondary battery 100.

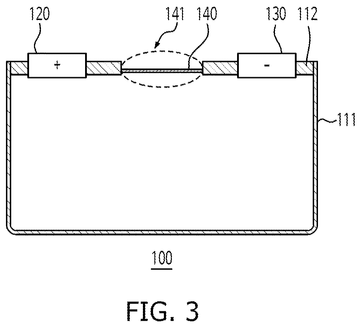

In FIG. 1, a single vent portion 140 is shown formed at the center of the cap plate 112, but the number and positions of the vent portion 140 may vary. The vent portion 140 may be formed at any position and in any number on the case 110. The shape and function of the vent hole and the vent portion 140 will be described below with reference to FIGS. 3 through 6, in detail.

The case 110 may be formed of, e.g., stainless steel material. The vent portion 140 formed on one side of the case 110 may be formed of the same stainless steel material as the case 110.

The cap plate 112 may include an electrolyte injection port 150. For example, the electrolyte injection port 150 may be a through-hole formed in the cap plate 112. After the cap plate 112 is joined to the open end of the case 110 to seal it, an electrolyte may be injected into the interior of the case 110 through the electrolyte injection port 150. After injecting the electrolyte, the electrolyte injection port 150 may then be sealed with a sealing member.

In FIG. 1, it is shown that both the vent portion 140 and the electrolyte injection port 150 are formed in the cap plate 112, but at least one of (e.g., only one of) the vent portion 140 or the electrolyte injection port 150 may be formed in the cap plate 112. Also, the cap plate 112 may be a cap or cover plate that does not form (e.g., does not include) either the vent portion 140 or the electrolyte injection port 150.

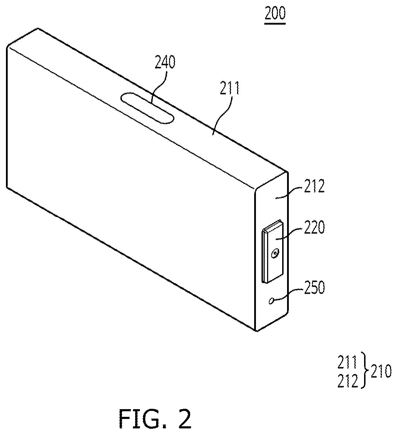

FIG. 2 is a perspective view illustrating another embodiment of a secondary battery 200 according to the present disclosure. FIG. 2 is a perspective view illustrating the secondary battery 200 having a form different from the secondary battery 100 shown in FIG. 1.

Referring to FIG. 2, the secondary battery 200 according to an embodiment of the present disclosure may include an electrode assembly, a case 210 that accommodates the electrode assembly and has a vent hole formed on at least one side, and a vent portion 240 arranged in the vent hole.

The case 210 may include a body 211, a first cap plate 212, and a second cap plate. The body 211 may have a rectangular parallelepiped shape whose first end is open and whose second end opposite the first end is also open. For instance, the body 211 may include opposing long side wall portions, opposing short side wall portions, a first open surface, and a second open surface.

The first cap plate 212 and the second cap plate may be coupled to the body 211 to seal the case 210. For example, the first cap plate 212 may be coupled to the first open surface (i.e., the first end) of the body 211, and the second cap plate may be coupled to the second open surface (i.e., the second end) of the body 211.

The first cap plate 212 may be coupled to a first electrode terminal 220 that is electrically connected to a first electrode of the electrode assembly. The first electrode terminal 220 may pass through the first cap plate 212 to protrude outward. Similarly, the second cap plate may be coupled to a second electrode terminal that is electrically connected to a second electrode of the electrode assembly, and that second electrode terminal may pass through the second cap plate and protrude outward. At least one of the first cap plate 212 or the second cap plate may include an electrolyte injection port 250.

At least one surface of the case 210 may include the vent portion 240. As illustrated in FIG. 2, the vent portion 240 may be formed on the body 211 of the case 210. For instance, as illustrated in FIG. 2, the vent portion 240 may be formed on an upper surface of the case 210, while the electrolyte injection port 250 and the first electrode terminal 220 may be formed on a lateral surface of the case 210 perpendicular to the upper surface.

The remaining configuration of the secondary battery 200 may be identical to that described with reference to FIG. 1. Although FIGS. 1 and 2 show examples in which the secondary battery is a prismatic battery or a side-terminal prismatic battery, the type of secondary battery may vary. For example, the secondary battery may be a cylindrical battery, a pouch-type battery, or any other type of battery. In that case, the vent portion may be formed on at least one surface of the case, and the location of the vent portion may be suitably varied depending on the type of case.

Hereinafter, a vent portion included in a secondary battery according to an embodiment of the present disclosure will be described in detail with reference to FIGS. 3 through 6.

FIG. 3 is a cross-sectional view illustrating the secondary battery 100 taken along line a-a' of FIG. 1.

Referring to FIG. 3, a vent hole 141 may be configured to penetrate at least one surface of the case 110. For example, as illustrated in FIG. 3, at least one side of the case 110 may include the cap plate 112, and the vent portion 140 may be formed in the cap plate 112. However, the position where the vent portion 140 is formed in the cap plate 112 may vary. In another example, as illustrated in FIG. 2, the vent portion 140 may also be formed on one side of the body 111.

As illustrated in FIG. 3, the vent hole 141 may be disposed between the first electrode terminal 120 and the second electrode terminal 130 disposed on the cap plate 112. When the vent portion 140 ruptures, an emission may be discharged through the vent hole 141, and the emission may include vent gas, explosion pressure, flame, and debris.

The vent portion 140 may be inserted into the vent hole 141 while coupled to the vent hole 141. Accordingly, the vent portion 140 may seal the vent hole 141.

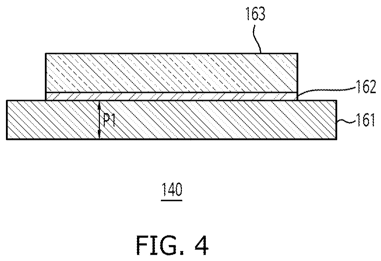

FIG. 4 illustrates a detailed cross-sectional view of the vent portion 140 of the secondary battery according to an embodiment of the present disclosure. FIG. 4 is an enlarged view of the portion in the dashed circle in FIG. 3.

Referring to FIG. 4, the vent portion 140 included in the secondary battery according to an embodiment of the present disclosure may include a polymer layer 161 and a brittle layer 163 disposed on the polymer layer 161. The polymer layer 161 may be attached to the brittle layer 163 via an adhesive layer 162.

The polymer layer 161 may have chemical stability and thermal stability so that it does not react with high-temperature gas or an electrolyte possibly generated inside the secondary battery, and may minimize chemical changes or damage at high temperatures. In addition, the polymer layer 161 may have excellent elasticity, preventing excessive expansion or fracture when the internal pressure of the secondary battery rises.

According to an embodiment of the present disclosure, the polymer layer 161 may include at least one of polypropylene, polyimide, polyvinyl chloride, polytetrafluoroethylene, polyurethane, polyamide, and combinations thereof.

The polymer layer 161 may be disposed at the very bottom of the vent portion 140 to not only support the brittle layer 163 but also seal the vent hole 141. For example, referring to FIGS. 3 and 4, a length of the polymer layer 161 in the longitudinal direction of the body 111 of the case 110 may equal a length of the vent hole 141, so the polymer layer 161 may seal the vent hole 141. For example, referring to FIGS. 3 and 4, the polymer layer 161 may directly face (e.g., may be in direct contact with) an interior of the body 111 of the case 110.

The polymer layer 161 may have a fracture pressure of less than 5 bar. When no external impact or the like occurs and the internal pressure of the secondary battery increases, the polymer layer 161 may break before the brittle layer 163. In addition, if an external impact or the like does occur, the brittle layer 163 may rupture first, and the polymer layer 161 may withstand the internal pressure until reaching its own fracture pressure, at which point the polymer layer 161 may rupture.

A thickness P1 of the polymer layer 161 may be less than 1 mm. If the thickness P1 of the polymer layer 161 is greater than or equal to 1 mm, the fracture pressure may become excessively high, resulting in the polymer layer 161 failing to rupture even if the brittle layer 163 ruptures in an event such as an external impact.

The brittle layer 163 may be formed of a highly brittle material and may therefore rupture at a relatively low pressure in the event of a short circuit or external impact, quickly releasing the heat and high-temperature gas generated inside the secondary battery to the outside, and rapidly lowering the internal pressure of the secondary battery. This may prevent the secondary battery from exploding or being damaged and may further prevent thermal propagation to an adjacent secondary battery.

According to an embodiment of the present disclosure, the brittle layer 163 may include at least one of glass, ceramic, silicon, limestone, aluminum oxide (Al₂O₃), indium tin oxide (ITO), a magnesium alloy, and combinations thereof.

The brittle layer 163 may have a fracture pressure of 5 bar to 20 bar. In other words, when no external impact occurs, it may rupture at a relatively high pressure to block moisture from entering the secondary battery, thereby securing the battery's lifespan. Meanwhile, in the event of an external impact or the like, the brittle layer 163 is the first to rupture, leaving only the polymer layer 161, which has a relatively low fracture pressure. Thus, the vent portion 140 may open at a low fracture pressure, promptly discharging heat and high-temperature gas from inside the secondary battery.

The brittle layer 163 may function as a support when no external impact or the like occurs, and the thickness of the brittle layer 163 may vary. For example, referring to FIGS. 3-4, the brittle layer 163 may be on the polymer layer 161 and may face the exterior of the body 111 of the case 110. For example, referring to FIG. 4, the brittle layer 163 may be shorter than the polymer layer 161 along a longitudinal direction of the vent portion 140 (i.e., the longitudinal direction of the case 110).

According to an embodiment of the present disclosure, the vent portion 140 may further include the adhesive layer 162 disposed between the polymer layer 161 and the brittle layer 163 (e.g., the vent portion 140 may include a stack of the polymer layer 161, the adhesive layer 162, and the brittle layer 163).

According to an embodiment of the present disclosure, the adhesive layer 162 may include at least one of an acrylic adhesive, a rubber adhesive, a silicone adhesive, an epoxy adhesive, a polyurethane adhesive, a cyanoacrylate adhesive, a polyvinyl chloride adhesive, a hot melt adhesive, and combinations thereof. For example, the adhesive may include an acrylic adhesive, which may mainly contain an acrylic polymer and may exhibit strong adhesive strength. When the vent portion 140 is formed of a resin material, the adhesive layer 162 may be set as an acrylic adhesive capable of providing strong adhesion on the surface of the resin material. Accordingly, if the internal pressure of the secondary battery 100 is lower than the fracture pressure of the vent portion 140, the vent portion 140 may not rupture or separate from the cap plate.

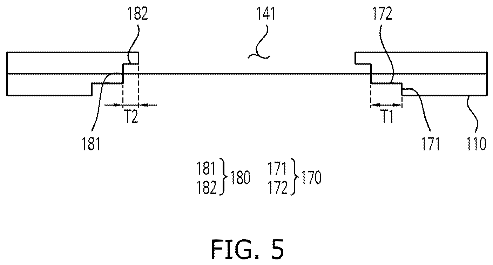

FIG. 5 illustrates a surface of the case 110 of the secondary battery according to an embodiment of the present disclosure.

Referring to FIG. 5, in a secondary battery according to an embodiment of the present disclosure, a lower end of one side of the case 110 that is in contact with the vent hole 141 may include a first stepped portion 170 and a second stepped portion 180 that is connected to the first stepped portion 170 and is located at a level higher than an upper surface of the first stepped portion 170. For example, referring to FIGS. 3-5, the lower end of the one side of the case 110 that is in contact with the vent hole 141 may refer to an inner surface of the case 110 that is facing the interior of the case 110. For example, referring to FIGS. 4-5, the second stepped portion 180 may be at a level higher than (e.g., above) an upper surface of the first stepped portion 170, relative to the interior of the case 110. For example, referring to FIG. 5, the first stepped portion 170 and the second stepped portion 180 may be arranged sequentially from the inner surface of the case 110 that includes the vent hole 141 toward the outer surface of the case 110 that include the vent hole 141, and the first and second stepped portions 170 and 180 may define the lateral sides of the vent hole 141 to accommodate the vent portion 140 from FIG. 4.

For example, the vent hole 141 may be formed at the center on the one side of the case 110, and one side of the vent hole 141 may be in contact with the first stepped portion 170 and the second stepped portion 180 (e.g., a same side of the vent hole 141 may be in contact with both the first stepped portion 170 and the second stepped portion 180). Around the vent hole 141, the first stepped portion 170 and the second stepped portion 180 having the same shape and size may be arranged in the opposite position or in a position symmetric to the vent hole 141 (e.g., each of the first stepped portion 170 and the second stepped portion 180 may surround an entire perimeter of the vent hole 141, as view in a top view).

The first stepped portion 170 may be connected to a lower (e.g., inner) surface of the one side of the case 110 in contact with the vent hole 141, and may include a first surface 171 perpendicular to the lower surface, and a second surface 172 that is connected to the first surface 171 and parallel to the lower surface. A length T1 of the second surface 172 along the longitudinal direction of the case 110 may be greater than or equal to 2 mm. When the length T1 of the second surface 172 is greater than or equal to 2 mm, the sealing effect of the vent hole 141 by the polymer layer bonded to the first stepped portion 170 may be improved.

The second stepped portion 180 may be connected to the second surface 172, and may include a third surface 181 perpendicular to the lower surface, and a fourth surface 182 that is connected to the third surface 181 and parallel to the lower surface. A length T2 of the fourth surface 182 along the longitudinal direction of the case 110 may be greater than or equal to 1 mm. When the length T2 of the fourth surface 182 is greater than or equal to 1 mm, the supporting function provided by the brittle layer bonded to the second stepped portion 180 can be enhanced.

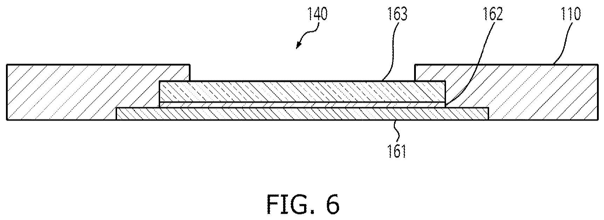

FIG. 6 illustrates the one surface of the case 110 of the secondary battery with the vent portion 140 according to an embodiment of the present disclosure.

Referring to FIG. 6, in a secondary battery according to an embodiment of the present disclosure, the outline of the first and second stepped portions 170 and 180 defining the vent hole 141 may be complementary with respect to the outer outline of the vent portion 140. The vent portion 140 may fit into the stepped shape of the vent hole 141.

In detail, as illustrated in FIGS. 5-6, the polymer layer 161 of the vent portion 140 may be bonded to the first stepped portion 170, and the brittle layer 163 of the vent portion 140 may be bonded to the second stepped portion 180. The adhesive layer 162 positioned between the polymer layer 161 and the brittle layer 163 that imparts adhesion to these two layers may be further included, and the adhesive layer 162 may have a length corresponding to that of the brittle layer 163.

The polymer layer 161 may be bonded to the first stepped portion 170 so that the first surface 171 contacts a side surface of the polymer layer 161, and the second surface 172 contacts a portion of an upper surface of the polymer layer 161. Thus, the polymer layer 161 can be stably secured by the first stepped portion 170.

The brittle layer 163 may be bonded to the second stepped portion 180 so that the third surface 181 contacts a side surface of the brittle layer 163, and the fourth surface 182 contacts a portion of an upper surface of the brittle layer 163. Thus, the brittle layer 163 can be stably secured by the second stepped portion 180.

Meanwhile, in addition to being disposed between the polymer layer 161 and the brittle layer 163, the adhesive layer 162 may also be included between the polymer layer 161 and the first stepped portion 170 and between the brittle layer 163 and the second stepped portion 180. For example, the first surface 171 and the second surface 172 included in the first stepped portion 170, and the third surface 181 and the fourth surface 182 included in the second stepped portion 180, may each have an adhesive layer containing an adhesive component interposed therein so that the polymer layer 161 and the brittle layer 163 can be stably secured to the one side surface of the case 110.

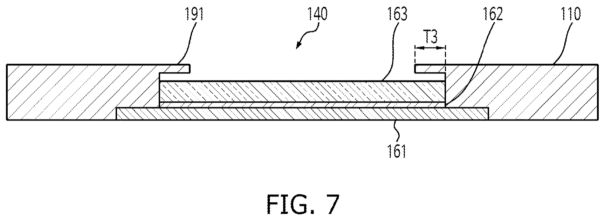

Hereinafter, details regarding a protrusion structure or a groove structure included in a case of a secondary battery according to an embodiment of the present disclosure will be described with reference to FIGS. 7 through 11.

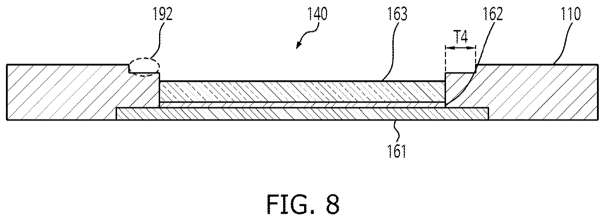

FIGS. 7 and 8 illustrate a surface of a case of a secondary battery according to other embodiments of the present disclosure.

Referring to FIG. 7, a secondary battery according to an embodiment of the present disclosure may include an electrode assembly, the case 110 that accommodates the electrode assembly and has a vent hole formed on at least one side, and a vent portion 140 arranged in the vent hole. Further, a protrusion structure 191 may be formed at an upper end of the case 110 in contact with the vent hole, and the vent portion 140 I the vent hole may include the polymer layer 161, the adhesive layer 162 arranged on the polymer layer 161, and the brittle layer 163 arranged on the adhesive layer 162. For example, referring to FIG. 7, the protrusion structure 191 may be integral with and extend from the case 110 into the vent hole to partially overlap an edge of the upper surface of the brittle layer 163 (e.g., the brittle layer 163 may be between the polymer layer 161 and the protrusion structure 191).

The protrusion structure 191 may be formed by a portion of an upper end of one side of the case 110 in contact with the vent hole extending parallel to a lower surface of that side of the case 110 in the direction of the vent hole. For example, the protrusion structure 191 may be formed at a portion of the upper end of one side of the case 110 in contact with the vent hole, and the same shape and size of the protrusion structure 191 may be formed in a portion of the upper end of the opposite side of the case 110 in a position symmetrical about the vent hole.

When an external impact or the like occurs, the protrusion structure 191 may facilitate the breaking of the brittle layer 163. That is, when an external impact occurs, thereby increasing the temperature and pressure inside the secondary battery, the brittle layer 163 may deform beyond the top of the vent hole due to the internal pressure of the battery. By contacting the protrusion structure 191 in this deformed state, the brittle layer 163 may break more easily than if it were simply broken by the battery's internal pressure.

A length T3 of the protrusion structure 191 along the longitudinal direction of the case 110 may be 1 mm to 10 mm. Within this range, the protrusion structure 191 may readily break the brittle layer 163, and when the vent portion 140 opens, an excellent heat and gas discharge function may be realized.

Referring to FIG. 8, a secondary battery according to an embodiment of the present disclosure may include an electrode assembly, the case that accommodates the electrode assembly and has a vent hole formed on at least one side, and the vent portion 140 arranged in the vent hole. Further, a groove structure 192 may be formed at an upper end of the case 110 in contact (e.g., in fluid communication) with the vent hole, and the vent portion 140 in the vent hole may include the polymer layer 161, the adhesive layer 162 arranged on the polymer layer 161, and the brittle layer 163 arranged on the adhesive layer 162. For example, referring to FIG. 8, the groove structure 192 may surround the top of the vent hole (e.g., a portion of the case 110 may be between the groove structure 192 and the upper surface of an edge of the polymer layer 161).

The groove structure 192 may be formed by a portion of an upper end of one side of the case 110 in contact with the vent hole being recessed inwardly. For instance, the groove structure 192 may be formed at a portion of the upper end of one side of the case 110 in contact with the vent hole, and the same shape and size of the groove structure 192 may be formed at a portion of the upper end of the opposite side of the case 110 symmetrically about the vent hole.

When an external impact or the like occurs, the groove structure 192 may facilitate the breaking of the brittle layer 163. That is, if the internal temperature and pressure of the secondary battery increase due to an external impact, the brittle layer 163 may deform beyond the top edge of the vent hole under the internal pressure. At this time, when the deformed brittle layer 163 comes into contact with the groove structure 192, it may be more easily broken compared to simply being fractured due to the internal pressure of the secondary battery.

A length T4 of the groove structure 192 along the longitudinal direction of the case 110 may be 1 mm to 10 mm. Within this numerical range, the groove structure 192 may more easily break the brittle layer 163, and upon opening of the vent portion 140, may exhibit excellent heat and gas discharge functionality.

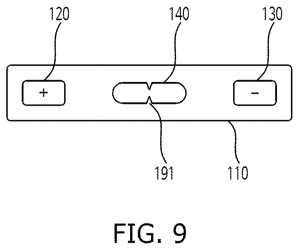

FIGS. 9 through 11 are top views illustrating a surface of the case 110 of the secondary battery according to other embodiments of the present disclosure. Specifically, FIGS. 9 through 11 show examples of various shapes of the protrusion structure 191 formed on the case 110.

Referring to FIGS. 9 through 11, the brittle layer 163 may have a shape corresponding to the formation of the vent hole, and the protrusion structure 191 may be formed at any position along the part where the brittle layer 163 and the case 110 contact.

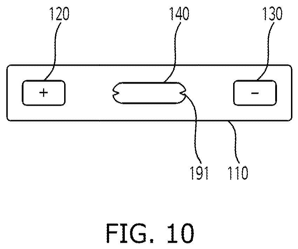

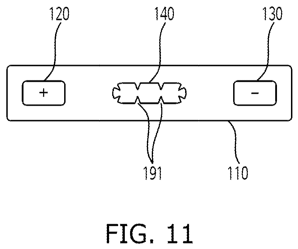

The protrusion structure 191 may be formed symmetrically or asymmetrically about the center of the vent hole. In addition, to facilitate easier rupture of the brittle layer 163, two or more protrusion structures 191 may be formed. For instance, referring to FIG. 9, two protrusion structures 191 may be formed symmetrically about the center of the vent hole in the short side direction of the case 110. Referring to FIG. 10, two protrusion structures 191 may be formed symmetrically about the center of the vent hole in the long side direction of the case 110. Referring to FIG. 11, two or more protrusion structures 191 may be formed symmetrically about the center of the vent hole at the long side portion and the curved portion of the vent hole.

Meanwhile, again referring to FIGS. 7 and 8, according to an embodiment of the present disclosure, the lower end of one side of the case 110 in contact with the vent hole may include a stepped portion. Furthermore, according to an embodiment of the present disclosure, the polymer layer 161 may be bonded to the stepped portion. The shape of that stepped portion may be identical to the first stepped portion described above with reference to FIG. 5, and the bonding of the polymer layer 161 to the stepped portion may be as explained with reference to FIG. 6.

According to an embodiment of the present disclosure, the brittle layer 163 may be bonded to both (e.g., facing) inner surfaces on one side of the case 110 in contact with the vent hole (e.g., in a cross-sectional view). In other words, both (e.g., opposite) side surfaces of the brittle layer 163 may contact one surface of the case 110 where the protrusion structure 191 or the groove structure 192 is formed. In this scenario, the brittle layer 163 may not contribute to sealing the vent hole.

In FIGS. 7 through 11, the remaining configuration of the secondary battery including a case having a protrusion structure or a groove structure may be identical to that described above with reference to FIGS. 1 through 6.

By way of summation and review, a secondary battery may include a vent portion that may discharge heat and gas in the event of an internal short, an overcurrent or overvoltage charging state, exposure to a high temperature, or an external impact. Some known types of vent portions are formed of a flexible metal material and are characterized by opening only upon reaching a certain internal pressure. However, if the fracture pressure of the vent portion is too low, moisture and the like can penetrate the interior of the cell and shorten the cell's lifespan, whereas if the fracture pressure is too high, there may be a problem of failing to discharge heat and gas quickly when an event such as a short circuit occurs.

In contrast, according to some embodiments of the present disclosure, by placing a vent portion including a polymer layer and a brittle layer on one surface of the case of the secondary battery, the fracture pressure can be made lower than before the event in the event of an external impact or the like. Therefore, when such an event occurs, heat and gas inside the secondary battery can be quickly discharged, and when no event such as an external impact occurs, a high fracture pressure can be realized to secure the lifespan of the secondary battery. In particular, when an event occurs, the brittle layer may first break and open the vent portion, preventing thermal propagation to adjacent cells and consequent thermal runaway.

In addition, according to some embodiments of the present disclosure, by forming a protrusion structure or a groove structure at the upper end of the case in contact with the vent hole, the brittle layer may be more easily broken in the event of an external impact or the like.

However, aspects and features of the present disclosure are not limited to those described above, and other aspects and features not mentioned will be clearly understood by a person skilled in the art from the detailed description, described above.

Although the present disclosure has been described above with respect to certain embodiments, it is not limited to these embodiments.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A secondary battery (100, 200), comprising:
an electrode assembly (101);
a case (110, 210) accommodating the electrode assembly (101), the case (110, 210) having a vent hole (141) on at least one side; and
a vent portion (140, 240) in the vent hole (141), the vent portion (140, 240) including a polymer layer (161) and a brittle layer (163) on the polymer layer (161).

2. The secondary battery (100, 200) as claimed in claim 1, wherein the polymer layer (161) includes at least one of polypropylene, polyimide, polyvinyl chloride, polytetrafluoroethylene, polyurethane, polyamide, and combinations thereof.

3. The secondary battery (100, 200) as claimed in claim 1 or 2, wherein the brittle layer (163) includes at least one of glass, ceramic, silicon, limestone, aluminum oxide, indium tin oxide, a magnesium alloy, and combinations thereof.

4. The secondary battery (100, 200) as claimed in any one of the preceding claims, wherein a lower end of the at least one side of the case (110, 210) is in contact with the vent hole (141), the lower end including:
a first stepped portion (170); and
a second stepped portion (180) connected to the first stepped portion (170), the second stepped portion (180) being at a level higher than an upper surface of the first stepped portion (170).

5. The secondary battery (100, 200) as claimed in claim 4, wherein the polymer layer (161) is bonded to the first stepped portion (170).

6. The secondary battery (100, 200) as claimed in claim 4 or 5, wherein the brittle layer (163) is bonded to the second stepped portion (180).

7. The secondary battery (100, 200) as claimed in any one of the claims 4 to 6, wherein the first stepped portion (170) includes:
a first surface (171) connected to a lower surface of the at least one side of the case (110, 210) in contact with the vent hole (141), the first surface (171) being perpendicular to the lower surface; and
a second surface (172) connected to the first surface (171), the second surface (172) being parallel to the lower surface, and a length of the second surface (172) along a longitudinal direction of the case (110, 210) being greater than or equal to 2 mm.

8. The secondary battery (100, 200) as claimed in claim 7, wherein the second stepped portion (180) includes:
a third surface (181) connected to the second surface (172), the third surface (181) being perpendicular to the lower surface; and
a fourth surface (182) connected to the third surface (181), the fourth surface (182) being parallel to the lower surface, and a length of the fourth surface (182) along the longitudinal direction of the case (110, 210) being greater than or equal to 1 mm.

9. The secondary battery (100, 200) as claimed in any one of the preceding claims, wherein the at least one side of the case (110, 210) includes a cap plate (112), the vent portion (140, 240) being in the cap plate (112).

10. The secondary battery (100, 200) as claimed in any one of the preceding claims, further comprising an adhesive layer (162) between the polymer layer (161) and the brittle layer (163).

11. The secondary battery (100, 200) as claimed in claim 10, wherein the adhesive layer (162) includes at least one of an acrylic adhesive, a rubber adhesive, a silicone adhesive, an epoxy adhesive, a polyurethane adhesive, a cyanoacrylate adhesive, a polyvinyl chloride adhesive, a hot melt adhesive, and combinations thereof.

12. The secondary battery (100, 200) as claimed in any one of the preceding claims, wherein the vent portion (140, 240) further includes an adhesive layer (162) disposed between the polymer layer (161) and the brittle layer (163); and
wherein an upper end of the case (110, 210) in contact with the vent hole (141) includes a protrusion structure (191) or a groove structure (192).

13. The secondary battery (100, 200) as claimed in claim 12, wherein:
the upper end of the case (110, 210) in contact with the vent hole (141) includes the protrusion structure (191), and
the protrusion structure (191) is integral with an upper end of the at least one side of the case (110, 210) in contact with the vent hole (141), the protrusion structure (191) extending parallel to a lower surface of the at least one side of the case (110, 210) toward the vent hole (141).

14. The secondary battery (100, 200) as claimed in claim 12 or 13, wherein:
the upper end of the case (110, 210) in contact with the vent hole (141) includes the groove structure (192), and
the groove structure (192) is recessed inwardly into an upper end of the at least one side of the case (110, 210) in contact with the vent hole (141).

15. The secondary battery (100, 200) as claimed in any one of the claims 12 to 14, wherein the brittle layer (163) is bonded to facing inner surfaces of the at least one side of the case (110, 210) in contact with the vent hole (141).
